# FASCICULE DE BREVET EUROPEEN

(11) **EP 3 592 959 B1**
(45) Date de publication et mention de la délivrance du brevet: **25.08.2021**
(21) Numéro de dépôt: 18712961.4
(22) Date de dépôt: 06.03.2018
(51) Int. Cl.: F02C 9/18

(54) **PROCÉDÉ ET DISPOSITIF DE DÉTECTION DE CONDITIONS PROPICES À L'APPARITION D'UN POMPAGE EN VUE DE PROTÉGER UN COMPRESSEUR D'UNE TURBOMACHINE D'AÉRONEF**
VERFAHREN UND VORRICHTUNG ZUM ERFASSEN VON FÜR DEN PUMPBEGINN GÜNSTIGEN BEDINGUNGEN ZUM SCHUTZ EINES VERDICHTERS EINES FLUGZEUGTURBINENMOTORS
METHOD AND DEVICE FOR DETECTING CONDITIONS CONDUCIVE TO THE ONSET OF PUMPING WITH A VIEW TO PROTECTING A COMPRESSOR OF AN AIRCRAFT TURBINE ENGINE

(30) Priorité: 07.03.2017 FR 1751842
(43) Date de publication de la demande: 15.01.2020
(73) Titulaire: Safran Aircraft Engines, 75015 Paris (FR)
(72) Inventeur: EBURDERIE, Emmanuel, Mickaël, 77550 Moissy-Cramayel (FR)
(74) Mandataire: Gevers & Orès
(86) Numéro de dépôt international: PCT/FR2018/050515
(87) Numéro de publication internationale: WO 2018/162841

(56) Documents cités:
- FR-A1- 2 332 428
- FR-A1- 2 962 500
- US-A- 4 083 235
- US-A- 4 756 152

## Description

### Arrière-plan de l'invention

La présente invention se rapporte au domaine général des turbomachines d'aéronef. En particulier, la présente invention concerne la détection de conditions de pompage pouvant affecter un compresseur d'une turbomachine d'aéronef, notamment un compresseur basse pression d'un turboréacteur à double corps et à double flux. Dans la présente demande de brevet, on entend par conditions de pompage des conditions propices à l'apparition d'un pompage.

Par définition, un pompage est une instabilité aérodynamique de l'écoulement de fluide au travers d'un compresseur de turbomachine, qui peut s'accompagner d'une inversion de débit. Par exemple, si le compresseur cherche à comprimer plus de gaz que ce que la turbine en aval peut faire débiter, il peut se produire des retours pulsés de gaz chauds vers l'avant, c'est-à-dire vers l'amont de l'écoulement des gaz, avec décrochage de l'écoulement sur les aubes du compresseur.

Un pompage peut ainsi conduire à des dommages aux pièces constitutives d'une turbomachine. Ces dommages comprennent la rupture d'aubes du compresseur, la destruction de paliers, ou encore l'extinction de la turbomachine. On comprend donc l'importance de pouvoir détecter de manière fiable et précise les conditions propices à l'apparition d'un pompage dans un compresseur de turbomachine afin de le prévenir. L'apparition d'un pompage peut en effet entraîner des conséquences opérationnelles pouvant impliquer des coûts financiers importants.

Il est connu des moyens pour préserver l'intégrité et les performances d'un compresseur dans certaines conditions propices à un pompage. En particulier, il est connu des procédés et des dispositifs de détection d'un risque de pompage dans un compresseur lorsque la ligne de fonctionnement dudit compresseur devient inférieure à un seuil prédéterminé, dit ligne de pompage. Il est connu notamment de la publication de brevet US4756152A une méthode de régulation de la commande de vannes de décharge (bleed valve en anglais) d'un compresseur, notamment lors d'une décélération du turboréacteur, afin de récupérer de la marge au pompage.

Il est connu également de la publication de brevet FR 2 332 428 A1 un détecteur de blocage et un procédé de détection de blocage dans un moteur à turbine à gaz.

Certains compresseurs basse pression pour turbomachines d'aéronefs, également appelés « boosters », présentent une marge au pompage relativement faible à haute altitude. En d'autres termes, la ligne de fonctionnement du compresseur en stabilisé à haute altitude est proche de la ligne de pompage. Un compresseur basse pression d'un turboréacteur à double corps et à double flux peut donc présenter une sensibilité accrue aux pompages au-dessus d'une certaine altitude élevée.. Ceci nécessite de bien maitriser la gestion des protections contre le pompage du compresseur vis-à-vis des phases transitoires que peut voir la turbomachine.

En outre, les procédés et les dispositifs de détection connus ne permettent pas de détecter les conditions propices à l'apparition d'un pompage dans certaines situations de vol. Un exemple de situation de vol problématique est celle d'un aéronef volant en mode dit « auto-manette ». Lorsqu'un aéronef subit une brusque augmentation du vent de face, la vitesse vue par l'aéronef, qui est mesurée par rapport au vent relatif, augmente en conséquence. Dans ce qui suit, on parlera de la vitesse de l'aéronef comme la vitesse vue par l'aéronef, mesurée par exemple par un anémomètre à tube Pitot. En mode auto-manette et dans la majorité de la phase de croisière de l'aéronef, la puissance de la turbomachine est régulée pour que la vitesse de l'aéronef reste constante. Ainsi, lors d'une augmentation du vent de face, le mode auto-manette réagit de façon à diminuer la vitesse absolue de l'aéronef, pour que la vitesse vue par l'aéronef reste constante. Pour ceci, pour certaines catégories de moteurs et en fonction de la logique de commande adoptée par le motoriste, le mode auto-manette commande la réduction du régime de fonctionnement du compresseur basse pression (appelé aussi régime N1) de la turbomachine, afin de réduire le régime de la soufflante de la turbomachine et donc sa poussée. Ceci peut être problématique pour la détection des conditions de pompage, puisque les variations des régimes de la turbomachine sont limitées par le mode auto-manette, qui empêche les moyens habituels de détection des conditions de pompage de fonctionner.

Il existe donc certaines conditions propices à l'apparition d'un pompage, en particulier des conditions pouvant survenir dans le cadre d'un vol de croisière en altitude, qui ne peuvent pas être détectées par les procédés de détection connus de l'état de la technique.

### Objet et résumé de l'invention

Un objet de l'invention est de proposer un procédé de détection de conditions propices à l'apparition d'un pompage, pour protéger un compresseur basse pression d'un turboréacteur à double corps et à double flux en particulier dans le cadre d'un vol de croisière en altitude.

Corrélativement, un autre objet de l'invention est de proposer un dispositif pour commander l'ouverture et la fermeture de vannes de décharge d'un turboréacteur à double corps et à double flux en cas de détection de conditions propices à l'apparition d'un pompage d'un compresseur basse pression dudit turboréacteur.

Corrélativement, un autre objet de l'invention est de proposer un turboréacteur à double corps et à double flux dont un compresseur basse pression est protégé en cas de détection de conditions propices à l'apparition d'un pompage.

Dans la présente description et les revendications annexées, l'expression « supérieure à » est utilisée pour désigner une quantité dont la valeur est plus grande ou égale à une autre, tandis que l'expression « inférieure à » est utilisée pour désigner une quantité dont la valeur est plus petite ou égale à une autre. En outre, le calcul d'une différence entre une première quantité, par exemple une quantité mesurée en un premier instant, et une deuxième quantité, par exemple une quantité mesurée en un deuxième instant, désigne la soustraction de cette deuxième quantité par cette première quantité.

On comprendra également qu'une vitesse peut être exprimée en mètre par seconde ou en nombre de Mach. Le nombre de Mach d'un aéronef est obtenu en divisant la vitesse de cet aéronef par la vitesse du son, la vitesse du son étant égale à 340 m/s dans l'air à une température de 15 °C.

Un premier aspect de l'invention concerne ainsi un procédé de détection de conditions propices à l'apparition d'un pompage pouvant affecter un compresseur basse pression d'une turbomachine d'aéronef, ladite turbomachine comprenant en outre un compresseur haute pression, ledit procédé étant caractérisé en ce qu'il comprend:
- une première étape de mesure d'une variation de vitesse dudit aéronef ;
- une deuxième étape de mesure d'une variation de régime dudit compresseur haute pression;
- une étape préliminaire de mesure d'une altitude de l'aéronef ;
les conditions propices à l'apparition d'un pompage étant détectées lorsque les conditions a), b) et c) suivantes sont réalisées conjointement:
a) ladite variation de vitesse mesurée sur un intervalle de temps prédéterminé correspond à une accélération supérieure à un premier seuil positif, ledit premier seuil étant par exemple égal à 0.001 Mach par seconde, ledit intervalle de temps étant par exemple égal à 10 secondes,
b) ladite variation de régime mesurée correspond à une décélération inférieure à un deuxième seuil négatif, ledit deuxième seuil étant par exemple égal à -8 tours par minute par seconde, et
c) ladite altitude mesurée est supérieure à un troisième seuil prédéterminé, ledit troisième seuil étant par exemple égal à 25000 pieds (7620 mètres).

Avantageusement, ce procédé permet la détection de conditions propices à l'apparition d'un pompage de manière fiable sans affecter les paramètres de fonctionnement de la turbomachine.

Avantageusement, ce procédé permet d'éviter la détection erronée de conditions propices à l'apparition d'un pompage survenant en raison de phénomènes produisant des effets similaires à ceux d'une variation du régime de fonctionnement d'un compresseur de la turbomachine, par exemple une diminution de ce régime causée par un dysfonctionnement, par l'absorption de glace ou d'un corps étranger, ou encore par l'apparition d'autres phénomènes instables comme un décollement tournant.

Avantageusement, ce procédé permet de détecter l'apparition d'un pompage de manière fiable lorsque l'aéronef vole à haute altitude.

Dans un mode particulier de réalisation de l'invention, le procédé de détection comprend en outre :
- une quatrième étape de mesure d'un premier régime commandé du compresseur basse pression;
- une cinquième étape de mesure d'un deuxième régime courant du compresseur basse pression;
les conditions propices à l'apparition d'un pompage étant détectées, indépendamment de la réalisation des conditions a), b) et c), lorsque la condition d) suivante est réalisée:
d) la différence entre ledit premier régime commandé mesuré et ledit deuxième régime courant mesuré est inférieure à un quatrième seuil, ledit quatrième seuil étant par exemple égal à -100 tours par minute.

Avantageusement, ce procédé permet la détection de conditions propices à l'apparition d'un pompage lorsque l'aéronef vole en mode auto-manette.

Dans un mode particulier de réalisation de l'invention, si l'altitude mesurée est inférieure au troisième seuil, les première et deuxième étapes de mesure sont ignorées et les conditions propices à l'apparition d'un pompage sont détectées lorsque la condition d) est réalisée.

Dans un mode particulier de réalisation de l'invention, la détection des conditions propices à l'apparition d'un pompage déclenche une commande d'ouverture de vannes de décharge situées entre le compresseur basse pression et le compresseur haute pression.

Dans un mode particulier de réalisation de l'invention, ladite variation de régime est mesurée en calculant la dérivée du régime puis en la filtrant avec une constante de temps adaptée pour moyenner la mesure sur un intervalle de temps compris entre 1 seconde et 3 secondes.

Un autre aspect de l'invention concerne en outre un dispositif de détection de conditions propices à l'apparition d'un pompage pouvant affecter un compresseur basse pression d'une turbomachine d'aéronef, ladite turbomachine comprenant en outre un compresseur haute pression, ledit dispositif étant caractérisé en ce qu'il comprend:
- des premiers moyens de mesure d'une variation de vitesse dudit aéronef ;
- des deuxièmes moyens de mesure d'une variation de régime dudit compresseur haute pression ;
- des troisièmes moyens de mesure d'une altitude de l'aéronef ;
   le dispositif comprenant en outre des moyens de détection d'une accélération de l'aéronef, lesdits moyens de détection comprenant:
   - des moyens d'activation d'un premier indicateur représentatif d'une variation de vitesse ;
   - des moyens d'activation d'un deuxième indicateur représentatif d'une variation de régime du compresseur haute pression;
   - des moyens d'activation d'un troisième indicateur ;
   - des moyens d'activation d'un indicateur de risque de pompage représentatif de la détection de conditions propices à l'apparition d'un pompage ;
   ledit indicateur de risque de pompage étant activé lorsque le premier indicateur, le deuxième indicateur et le troisième indicateur sont activés simultanément ;
   ∘ le premier indicateur étant activé lorsque la variation de vitesse mesurée sur un intervalle de temps prédéterminé correspond à une accélération supérieure à un premier seuil, ledit premier seuil étant par exemple égal à 0.001 Mach par seconde ;
   ∘ le deuxième indicateur étant activé lorsque la variation de régime mesurée correspond à une décélération inférieure à un deuxième seuil, ledit deuxième seuil étant par exemple égal à -8 tours par minute par seconde ; et
   ∘ le troisième indicateur étant activé lorsque l'altitude mesurée est supérieure à un troisième seuil prédéterminé, ledit troisième seuil étant par exemple égal à 25000 pieds (7620 mètres).

Avantageusement, ce dispositif permet la détection de conditions propices à l'apparition d'un pompage à partir de l'utilisation de moyens classiquement utilisés lors de la surveillance des phases de vol d'un aéronef, ce qui la rend simple à mettre en œuvre.

Dans un mode particulier de réalisation de l'invention, le dispositif de détection comprend en outre :
- des quatrièmes moyens de mesure d'un premier régime commandé du compresseur basse pression ;
- des cinquièmes moyens de mesure d'un deuxième régime courant du compresseur basse pression;
   les moyens de détection d'une accélération de l'aéronef comprenant en outre des moyens d'activation d'un quatrième indicateur, l'indicateur étant activé lorsque le premier indicateur, le deuxième indicateur et le troisième indicateur ne sont pas activés simultanément et lorsque ledit quatrième indicateur est activé, ledit quatrième indicateur étant activé lorsque la différence entre ledit premier régime commandé mesuré et ledit deuxième régime courant mesuré est inférieure à un quatrième seuil, ledit quatrième seuil étant par exemple égal à -100 tours par minute.

Un autre aspect de l'invention concerne une turbomachine comprenant un dispositif de détection conforme à l'invention.

Dans la présente description et les revendications annexées, il est considéré que toute grandeur d'une valeur prédéterminée est comprise dans un intervalle comprenant cette valeur, les bornes de cet intervalle pouvant s'éloigner de plusieurs ordres de grandeur de cette valeur.

Ainsi, le premier seuil est compris entre 10⁻⁴ Mach par seconde et 10⁻² Mach par seconde, ce premier seuil étant par exemple égal à 0.001 Mach par seconde.

L'intervalle de temps est compris entre 3 secondes et 20 secondes, cet intervalle de temps étant par exemple égal à 10 secondes.

Le deuxième seuil est compris entre -2 tours par minute par seconde et -20 tours par minute par seconde, ce deuxième seuil étant par exemple égal à -8 tours par minute par seconde.

Le troisième seuil est compris entre 20000 pieds (6096 mètres) et 30000 pieds (9144 mètres), ce troisième seuil étant par exemple égal à 25000 pieds (7620 mètres).

### Brève description des dessins

L'invention et ses caractéristiques techniques seront mieux comprises à la lecture de la description qui suit, accompagnée de plusieurs figures représentant respectivement :
- la **figure 1** représente, en coupe, une turbomachine sur laquelle l'invention est applicable ;
- la **figure 2** représente, sous forme d'organigramme, les principales étapes d'un procédé de détection de conditions propices à l'apparition d'un pompage selon l'invention, dans un mode de réalisation de l'invention ;
- la **figure 3** représente, sous forme d'organigramme, les principales étapes d'un procédé de détection de conditions propices à l'apparition d'un pompage selon l'invention, dans un autre mode de réalisation de l'invention ;
- la **figure 4** représente, sous forme d'organigramme, les principales étapes d'un procédé de détection de conditions propices à l'apparition d'un pompage selon l'invention, dans un autre mode de réalisation de l'invention ;
- la **figure 5** représente, sous forme d'organigramme, un exemple de moyens d'un dispositif de détection de conditions propices à l'apparition d'un pompage, dans un mode de réalisation de l'invention ;
- la **figure 6** représente, sous forme de graphique, un exemple illustrant la variation de plusieurs paramètres représentatifs de conditions propices à l'apparition d'un pompage pouvant affecter une turbomachine sur laquelle l'invention est applicable.

Naturellement, pour satisfaire des besoins spécifiques, une personne compétente dans le domaine de la technique pourra appliquer des modifications dans la description suivante. Bien qu'elle se réfère à différents modes de réalisation, la présente invention n'est pas limitée à ces modes de réalisation spécifiques, et toutes modifications propres au champ d'application de la présente invention peuvent être considérées comme évidentes pour une personne versée dans l'art de la technique correspondant.

### Description détaillée d'un mode de réalisation

L'invention propose donc, pour détecter certaines conditions propices à l'apparition d'un pompage pouvant affecter un compresseur basse pression d'une turbomachine d'aéronef, de surveiller d'une part les accélérations de cet aéronef via la détection d'une variation de sa vitesse, et de surveiller d'autre part les diminutions de régime d'un compresseur haute pression de la même turbomachine. Comme mentionné précédemment, une accélération de l'aéronef est une augmentation de la vitesse vue par l'aéronef, et peut donc être causée par une augmentation du vent de face.

De plus, l'invention propose d'améliorer cette détection dans certaines situations de vol en surveillant l'altitude de l'aéronef, afin de détecter en particulier des conditions de pompage spécifiques à un vol au-dessus d'un certain seuil d'altitude. En outre, une surveillance du régime de fonctionnement du compresseur basse pression vis-à-vis du régime commandé peut également être mise en œuvre par l'invention, afin notamment de détecter des conditions de pompage en dessous du seuil d'altitude susmentionné.

En d'autres mots, l'invention propose de relever et de combiner plusieurs indicateurs relatifs au comportement de la turbomachine et de l'aéronef transportant cette turbomachine, afin d'identifier de façon fiable et sélective des conditions propices à l'apparition d'un pompage.

Dans le cadre de la présente invention, on comprendra qu'un aéronef vole selon une phase de vol donnée. Une phase de vol d'un aéronef est, par exemple, une phase de décollage, une phase de montée, une phase de descente, une phase d'atterrissage, ou encore une phase de vol de croisière.

En particulier, on comprendra que la présente invention est applicable à un aéronef volant selon une phase de vol de croisière à haute altitude, au cours de laquelle le pilotage de l'aéronef s'effectue en mode auto-manette.

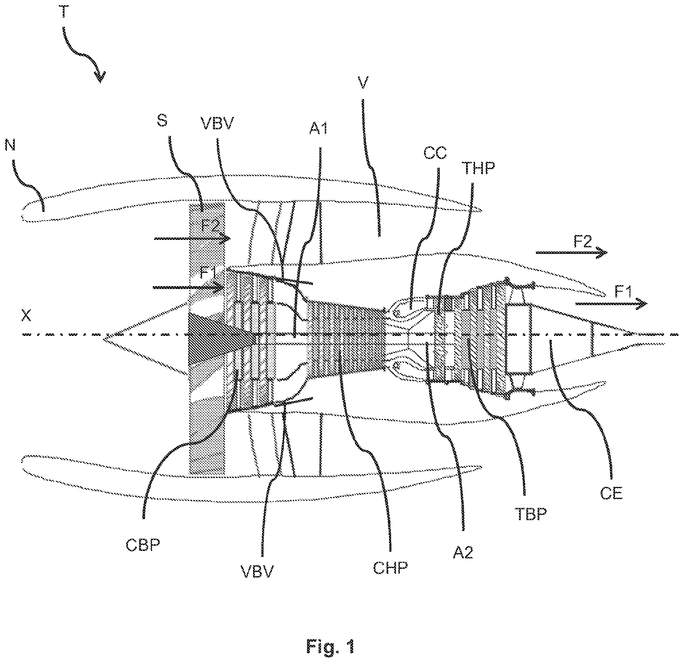

La **figure 1** représente une vue en coupe d'une turbomachine sur laquelle l'invention est applicable. La turbomachine est ici un turboréacteur **T** à double corps et à double flux, monté sur un aéronef.

De manière générale et sauf indication contraire, on définira ici que l'avant et l'arrière du turboréacteur **T,** ainsi que l'entrée et la sortie dudit turboréacteur **T,** sont définis relativement au sens de l'écoulement des fluides au sein de celui-ci. Par conséquent, l'avant et l'arrière du turboréacteur sont situés respectivement à l'amont et à l'aval de l'écoulement des fluides.

Le turboréacteur **T** comporte une nacelle **N.** La nacelle **N** entoure l'ensemble des composants du turboréacteur **T**, et comprend par exemple un carénage pour protéger ces composants de l'extérieur. La nacelle **N** présente une structure externe qui définit avec une structure interne une ou plusieurs veines **V.** Cette ou ces veines **V** permettent l'écoulement d'un fluide, par exemple un flux d'air, à l'intérieur de la nacelle **N** du turboréacteur **T.**

Le turboréacteur **T** comporte une soufflante **S** montée à l'avant de la nacelle **N**. La soufflante **S** est par exemple un rotor constitué de pales et/ou d'aubes, qui entraîné par la turbine du turboréacteur **T.**

La soufflante **S** a pour fonction de recevoir la totalité du fluide qui pénètre à l'avant du turboréacteur **T,** et de rediriger ce fluide dans l'ensemble des veines **V** de la nacelle **N.** Le fluide reçu par la soufflante **S** est divisé en un flux primaire **F1** et un flux secondaire **F2**, respectivement.

Le flux primaire **F1** traverse un compresseur d'entrée, dit compresseur basse pression **CBP,** formé à l'intérieur du turboréacteur **T** et solidaire de la soufflante **S.** Le rôle du compresseur basse pression **CBP** est d'augmenter la pression du fluide le traversant.

Un turbomoteur **T** selon un mode de réalisation de l'invention comprend en outre un compresseur haute pression **CBP,** une chambre de combustion **CC,** une turbine haute pression **THP** et une turbine basse pression **TBP**. Comme illustré, on comprendra que le compresseur haute pression **CHP** est disposé à l'arrière du compresseur basse pression **CBP.** La turbine haute pression **THP** est disposée à l'arrière du compresseur haute pression **CHP** et de la chambre de combustion **CC,** et la turbine basse pression **TBP** est disposée à l'arrière de la turbine haute pression **THP.**

Le compresseur basse pression **CBP** est couplé mécaniquement à la turbine basse pression **TBP** par un premier arbre **A1,** tandis que le compresseur haute pression **CHP** est couplé mécaniquement à la turbine haute pression **THP** par un deuxième arbre **A2** traversé coaxialement par le premier arbre **A1.**

Le compresseur haute pression **CHP** a pour fonction de recevoir et de comprimer les gaz issus du compresseur basse pression **CBP.**

Le compresseur basse pression **CBP** et la turbine basse pression **TBP** tournent à une même vitesse de rotation, tandis que le compresseur haute pression **CHP** et la turbine haute pression **THP** tournent à une même autre vitesse de rotation.

Comme illustré, le turboréacteur **T** à double corps et à double flux comprend d'une part un corps basse pression incluant le compresseur basse pression **CBP**, la turbine basse pression **TBP** et le premier arbre **A1,** et d'autre part un corps haute pression incluant le compresseur haute pression **CHP,** la turbine haute pression **THP** et le deuxième arbre **A2.** Ce corps basse pression et ce corps haute pression forment deux ensembles tournants mécaniquement indépendants l'un de l'autre.

Lorsque le turboréacteur **T** est en fonctionnement, le flux primaire **F1** traverse d'abord le compresseur basse pression **CBP** solidaire de la soufflante **S,** puis le compresseur haute pression **CHP**. Le compresseur haute pression **CHP** canalise le fluide comprimé vers la chambre de combustion **CC,** dans laquelle le fluide du flux primaire **F1** est mélangé à un carburant sous pression. Le mélange fluide-carburant est ensuite brûlé, et le flux sortant de la chambre de combustion **CC** entraîne la turbine haute pression **THP.** Selon qu'on injecte plus au moins de carburant dans la chambre de combustion **CC,** la turbine haute pression **THP** est soumise à des variations de vitesse de rotation.

On comprendra que la chambre de combustion **CC** est disposée, dans le sens de l'écoulement des fluides, entre le compresseur haute pression **CHP** et la turbine haute pression **THP.**

Le flux primaire **F1** est finalement éjecté à grande vitesse hors de la nacelle **N** vers l'arrière du turboréacteur **T** en s'écoulant le long du cône d'éjection **CE.** L'éjection du flux primaire **F1** à grande vitesse permet de générer une partie de la poussée utile à la propulsion d'un aéronef.

Selon un mode de réalisation de l'invention non représenté sur les figures, le turboréacteur **T** peut également comprendre des moyens de régulation pour réguler la vitesse de rotation de la turbine basse pression **TBP** à une vitesse sensiblement constante.

Lorsque le turboréacteur **T** est en fonctionnement, la soufflante **S** est entraînée en rotation par le passage du flux secondaire **F2,** qui brasse celui-ci en le dirigeant vers l'arrière du turboréacteur **T.** Les pales et/ou les aubes de la soufflante **S** vont interagir avec le fluide absorbé et augmenter sa vitesse. Le flux secondaire **F2,** s'écoule dans la ou les veines **V** formées à l'intérieur de la nacelle **N**. L'éjection du fluide correspondant au flux secondaire **F2** vers l'arrière du turboréacteur **T** représente l'essentiel de la poussée utile à la propulsion de l'aéronef.

Par conception, une turbomachine est prévue pour fonctionner dans des limites prescrites. Les compresseurs d'une turbomachine sont conçus pour fonctionner avec une marge suffisante, dite marge au pompage, pour que la turbomachine puisse fonctionner sans pompage dans son domaine d'utilisation.. On comprend que la capacité d'accélération ou de décélération d'une turbomachine est limitée par cette marge au pompage.

Il est connu cependant que des pompages peuvent se produire lorsque le régime de fonctionnement du compresseur basse pression **CBP** et le régime du compresseur haute pression **CHP** diminuent.

La marge au pompage d'un compresseur basse pression **CBP** de turboréacteur **T** à double corps et à double flux dépend entre autres du débit d'air traversant celui-ci, et de l'altitude de l'aéronef propulsé par ce turboréacteur. En particulier, cette marge de pompage est plus faible pour un aéronef volant au-dessus d'une certaine altitude, par exemple 25000 pieds (7620 mètres).

Un pompage du compresseur basse pression **CBP** peut survenir en phase de vol croisière à haute altitude d'un aéronef. En particulier, un pompage peut se produire lorsque le turboréacteur **T** subit une décélération commandée par le pilote de l'aéronef, ou par le mode auto-manette en condition d'atmosphère turbulente et notamment dans le cas d'un vent de face plus important. Cette décélération conduit à une diminution des régimes de fonctionnement respectifs du compresseur basse pression **CBP** et du compresseur haute pression **CHP**. Or, le compresseur basse pression **CBP** est lié à l'arbre **A1** du corps basse pression, qui possède plus d'inertie que l'arbre **A2** du corps haute pression auquel est lié le compresseur haute pression. Le régime du compresseur basse pression **CBP** décélère donc moins rapidement que celui du compresseur haute pression **CHP.** Ceci a pour conséquence une montée en pression de la ligne de fonctionnement du compresseur basse pression **CBP,** d'autant plus que le compresseur haute pression **CHP** possède des aubages statoriques à calage variable qui se ferment à la décélération et réduisent ainsi sa section de passage.

Si, lors de cette décélération, le rapport entre la pression mesurée en un point situé à l'amont du compresseur basse pression **CBP** et la pression mesurée en un point situé en aval du compresseur basse pression **CBP** dépasse un certain seuil, une situation de pompage peut se produire dans le compresseur basse pression **CBP.** Dans cette situation, le fonctionnement du turboréacteur **T** peut devenir instable, avec pour conséquence d'endommager le compresseur ou d'autres composants du turboréacteur **T.**

Pour protéger le turboréacteur **T** et ses différents éléments, il est connu des dispositifs de protection munis de vannes de décharge **VBV** (acronyme anglais de Variable Bleed Valve). Comme illustré sur la **figure** 1 selon un mode de réalisation de l'invention, le turboréacteur **T** comprend des vannes de décharge **VBV**, par exemple des valves ou des clapets, situées entre le compresseur basse pression **CBP** et le compresseur haute pression **CHP.**

Les vannes de décharge **VBV** sont conçues pour évacuer partie du flux primaire **F1** vers le flux secondaire **F2** lorsqu'elles sont ouvertes. En particulier, l'ouverture des vannes de décharge **VBV** permet d'évacuer une partie du flux primaire **F1** passant entre le compresseur basse pression **CBP** et le compresseur haute pression **CHP** vers la veine **V** où circule le flux secondaire **F2.** L'évacuation d'une partie du flux primaire **F1** dans la veine **V** où circule le flux secondaire **F2** permet de protéger le turboréacteur **T** d'un pompage du compresseur basse pression **CBP** lorsque celui-ci est traversé par un débit de fluide supérieur à celui que peut accepter le compresseur haute pression **CHP.**

La fermeture des vannes de décharge **VBV** maintient l'entièreté du flux primaire **F1** en écoulement entre le compresseur basse pression **CBP** et le compresseur haute pression **CHP.**

Les vannes de décharge **VBV** peuvent être fermées, ou ouvertes de façon graduelle avec différents angles d'ouverture possibles. La fermeture ou l'ouverture des vannes de décharge **VBV** est commandée par un calculateur moteur en fonction d'une loi de commande préétablie, ou en réponse à un évènement particulier. Par exemple, une telle loi de commande prend en compte le régime commandé du compresseur basse pression **CBP,** dit régime **N1**, réduit par une température mesurée à un endroit approprié du compresseur.

Selon un mode de réalisation de l'invention, la loi de commande prend également en compte des données établies par un procédé de détection de conditions propices à l'apparition d'un pompage.

Selon un mode de réalisation de l'invention non représenté sur les figures, la commande des vannes de décharge **VBV** est mise en œuvre pour éviter l'apparition d'un phénomène de pompage dans le turboréacteur **T** lorsque des conditions propices à l'apparition d'un pompage sont détectées.

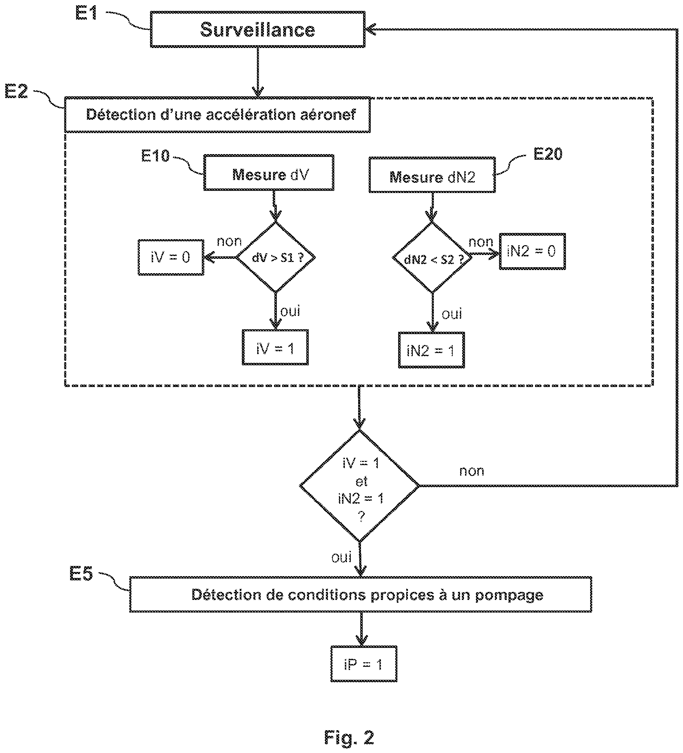

En référence à la **figure 2****,** on décrit ici les étapes du procédé de détection de conditions propices à l'apparition d'un pompage selon un mode de réalisation de l'invention, lorsque ledit procédé est mis en œuvre par la turbomachine.

On considère ici le cas d'un pompage pouvant affecter un compresseur basse pression **CBP** d'un turboréacteur **T** à double corps et à double flux. On comprendra que cette hypothèse n'est pas limitative, et que l'invention peut également être appliquée au compresseur haute pression **CHP** d'un turboréacteur **T,** ou encore à d'autres types de turbomachines d'aéronef.

Le procédé de détection comprend une étape **E1**, dite étape de surveillance, au cours de laquelle au moins un paramètre de l'aéronef, un paramètre du turboréacteur **T,** un paramètre du compresseur haute pression **CHP** ou encore un paramètre du compresseur basse pression **CBP** est détecté.

En outre, une étape **E2** de détection d'une accélération de l'aéronef est mise en œuvre lorsque l'étape **E1** de surveillance est active. L'étape **E2** évalue des indicateurs de détection de conditions propices à l'apparition d'un pompage, lesdits indicateurs étant par exemple des bits positionnés à 1 lorsqu'ils sont activés, et à 0 sinon. Ces indicateurs sont choisis parmi au moins ;
- un indicateur **iV** représentatif d'une variation de vitesse **dV** ;
- un indicateur **iN2** représentatif d'une variation de régime **dN2.**

Selon un mode de réalisation de l'invention, les étapes **E1** et **E2** sont réalisées simultanément.

Sur base d'études statistiques et expérimentales de turbomachines d'aéronefs volant en atmosphère turbulente, les inventeurs ont pu déterminer que les conditions propices à l'apparition d'un pompage correspondent à deux phénomènes relativement concomitants:
- une augmentation relativement brusque de la vitesse de l'aéronef, et donc une augmentation du nombre de Mach de l'aéronef ;
- une diminution du régime de fonctionnement du compresseur haute pression **CHP** de la turbomachine.

La variation de vitesse **dV** est mesurée sur un intervalle de temps prédéterminé, cet intervalle de temps étant par exemple égal à 10 secondes, et la variation de vitesse **dV** correspond à une accélération.

Selon un mode de réalisation de l'invention, ladite variation de vitesse **dV** de l'aéronef est une augmentation de vitesse dudit aéronef. Ladite variation de régime **dN2** du compresseur haute pression **CHP** est une diminution du régime dudit compresseur.

L'étape **E2** de détection d'une accélération de l'aéronef comprend une étape de mesure **E10** d'une variation de vitesse **dV**. L'étape **E2** comprend en outre une étape de mesure **E20** d'une variation de régime **dN2.**

Ladite variation de vitesse **dV** est une augmentation de vitesse de l'aéronef, exprimée en Mach par seconde, et ladite variation de régime **dN2** est une diminution du régime de fonctionnement du compresseur haute pression **CHP,** exprimée en tours par minute par seconde.

Selon un mode de réalisation de l'invention, une mesure de la variation de vitesse **dV** est réalisée selon l'état de la technique. Cette mesure peut être réalisée à l'aide de sondes et/ou de capteurs situés sur le fuselage de l'aéronef, par exemple sur le nez ou sur les ailes. Ces sondes et/ou ces capteurs sont configurés pour mesurer le flux d'air traversé par l'aéronef, et comprennent par exemple un tube de Pitot configuré pour mesurer la pression dynamique de l'air. La pression dynamique mesurée est comparée à la pression statique et permet de déterminer la vitesse **V** de l'aéronef.

L'étape **E10** mesure la vitesse **V** de l'aéronef en deux instants successifs, ces deux instants successifs étant par exemple séparés par un intervalle de 10 secondes. En d'autres termes, une première vitesse **V1** est mesurée en un premier instant **t1**, et une deuxième vitesse **V2** est mesurée en un deuxième instant **t2,** le deuxième instant **t2** se produisant 10 secondes après le premier instant **t1.** L'étape **E10** détermine ensuite la variation de vitesse **dV** en calculant la différence **V2-V1**.

L'étape **E10** compare la variation de vitesse **dV** à un seuil prédéfini, dit premier seuil **S1**. Si ladite variation de vitesse **dV** est supérieure audit premier seuil **S1,** l'indicateur **iV** est activé. La valeur de l'indicateur **iV** est positionnée à 1 si une variation de vitesse **dV** supérieure à **S1** est détectée, et à 0 sinon. Sinon, l'étape **E10** continue de mesurer la vitesse **V** de l'aéronef en vue de détecter éventuellement une variation de vitesse **dV** supérieure à **S1.**

L'étape **E20** mesure en chaque instant le régime **N2** du compresseur haute pression **CHP** du turboréacteur **T** à double corps et à double flux. Ledit régime **N2** peut être mesuré à partir de la vitesse de rotation du deuxième arbre **A2** du turboréacteur **T,** qui couple mécaniquement le compresseur haute pression **CHP** à la turbine haute pression **THP**. L'étape **E20** calcule ensuite la variation de régime **dN2,** égale à la dérivée par rapport au temps de **N2** en l'instant de mesure correspondant.

L'étape **E20** compare ensuite la variation de régime **dN2** à un seuil prédéfini négatif, dit deuxième seuil **S2.** Si ladite variation de régime **dN2** en valeur algébrique est inférieure au deuxième seuil **S2** négatif, autrement dit si la valeur absolue de la variation de régime **dN2** est supérieure à un seuil prédéfini positif qui est la valeur absolue du deuxième seuil **S2,** l'indicateur **iN2** est activé. La valeur de l'indicateur **iN2** est positionnée à 1 si une variation de régime **dN2** inférieure à **S2** est détectée, et à 0 sinon. Sinon, l'étape **E20** continue de mesurer le régime **N2** du compresseur haute pression **CHP** en vue de détecter éventuellement une variation de régime **dN2** inférieure à **S2.**

Selon un mode de réalisation de l'invention, l'étape **E10** peut déclencher l'étape **E20** lorsque la valeur de l'indicateur **iV** est déterminée.

La valeur du premier seuil **S1** et la valeur du deuxième seuil **S2** sont choisies de sorte à permettre une détection de conditions propices à l'apparition d'un pompage avec un risque minimum de fausse détection. Lesdites valeurs dépendent des caractéristiques de fonctionnement de la turbomachine sur laquelle l'invention est appliquée.

Il a été considéré le cas d'un aéronef volant en phase de vol croisière à haute altitude. Lors d'un tel vol de l'aéronef, il a été observé que :
- 3% du temps de vol moyen de cet aéronef se déroule en atmosphère turbulente où les variations de vitesse de l'aéronef sont supérieures à 0,01 Mach par 10 secondes ;
- 7% du temps de vol moyen de l'aéronef se déroule en atmosphère moyennement turbulente, où les variations de vitesse de l'aéronef sont inférieures à 0,01 Mach pour un intervalle de temps de 10 secondes et supérieures à 0,005 Mach pour ce même intervalle de temps;
- 90% du temps de vol moyen de l'aéronef se déroule en atmosphère calme, où les variations de vitesse de l'aéronef sont inférieures à 0,005 Mach pour un intervalle de temps égal à 10 secondes.

Les pompages étant plus propices à survenir en atmosphère turbulente, la valeur du premier seuil **S1** est ainsi choisie de préférence égale à ou proche de 0,01 Mach par 10 secondes, c'est-à-dire 0,001 Mach par seconde. Le Mach d'un aéronef volant en phase de vol croisière à haute altitude peut correspondre à une vitesse V comprise entre 0,74 et 0,80 Mach, soit une vitesse comprise entre 74% et 80% de la vitesse du son.

En outre, pour un aéronef en phase de vol croisière à haute altitude, l'apparition de conditions propices à l'apparition d'un pompage est nécessairement concomitante à une diminution du régime de fonctionnement du compresseur haute pression **CHP** du turboréacteur, correspondant à une décélération, en d'autres termes une accélération négative. Cette diminution est inférieure à -48 tours par minute, c'est-à-dire supérieure en valeur absolue à 48 tours par minute, sur un intervalle de temps égal à 10 secondes. La valeur du deuxième seuil **S2** est ainsi choisie de préférence égale à -8 tours par minute par seconde. Cette valeur permet avantageusement de limiter les conséquences d'une détection erronée de conditions propices à l'apparition d'un pompage pour un turboréacteur **T** à double corps et à double flux permettant la mise en œuvre de l'invention.

En particulier, il est constaté que le choix de ces valeurs pour les seuils **S1** et **S2** garantit que dans les conditions susmentionnées d'atmosphère turbulente, une baisse de régime du compresseur haute pression **CHP** supérieure en valeur absolue à un seuil positif prédéfini, sur une durée prédéfinie, conduira très probablement à un pompage du compresseur basse pression **CBP.** Il a été vérifié que le procédé de détection limite la détection erronée de conditions propices à l'apparition d'un pompage lors des décélérations du régime du compresseur haute pression **CHP.** Sur la base d'une étude statistique des temps de vol d'un aéronef équipé de turboréacteurs à double corps et à double flux susceptibles de subir les conditions de pompage susmentionnées, les inventeurs ont constaté que la détection erronée de conditions de pompage en atmosphère calme et en atmosphère moyennement turbulente ne survenait que pour environ 2,5% du temps de vol total de l'aéronef.

Successivement aux étapes **E1** et **E2,** le procédé de détection comprend une étape **E5**, dite étape de détection de conditions propices à l'apparition d'un pompage, au cours de laquelle l'activation simultanée des indicateurs **iV** et **iN2** est examinée. Si la valeur de l'indicateur **iV** et la valeur de l'indicateur **iN2** sont simultanément positionnées à 1, des conditions propices à l'apparition d'un pompage sont détectées, et un indicateur **iP** de risque de pompage est activé. La valeur de l'indicateur **iP** est positionnée à 1 en cas de détection de conditions propices à l'apparition d'un pompage. Sinon, le procédé reprend l'étape **E1** de surveillance, et continue de surveiller les variations de vitesse **dV** de l'aéronef et les variations de régime **dN2** du compresseur haute pression **CHP**.

Lorsque les conditions propices à l'apparition d'un pompage sont détectées, c'est-à-dire lorsque l'indicateur **iP** de risque de pompage est activé, le procédé de détection peut avoir pour fonction de commander l'ouverture des vannes de décharge **VBV** afin de protéger la turbomachine **T** du pompage.

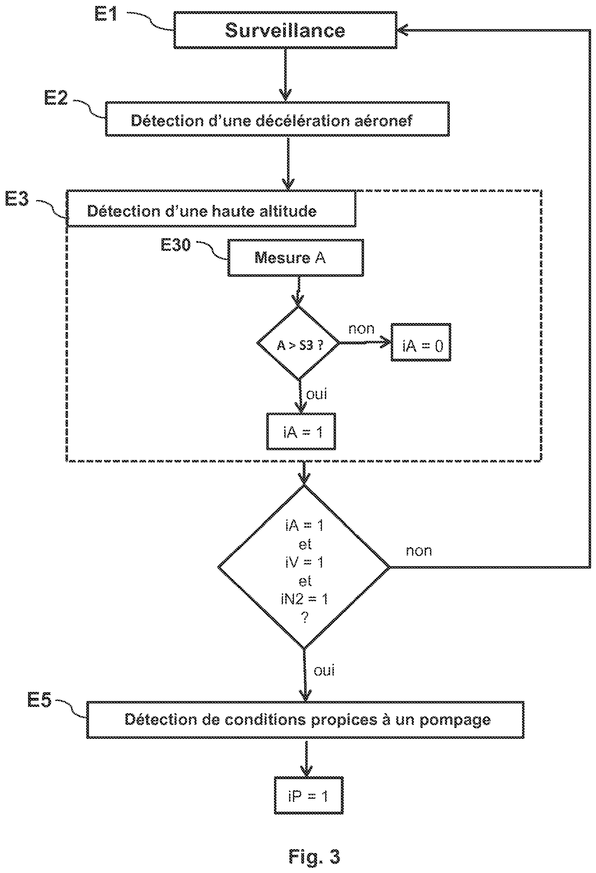

Comme illustré sur les **figures 3****,** **4** et **5****,** d'autres indicateurs que les indicateurs **iV** et **iN2** peuvent être utilisés pour renforcer la fiabilité de la détection de conditions propices à l'apparition d'un pompage.

Selon un mode de réalisation de l'invention comme illustré sur la **figure 3****,** le procédé de détection comprend une étape **E3,** dite étape de détection d'une haute altitude. Cette étape **E3** de détection d'une haute altitude peut être mise en œuvre sensiblement simultanément ou successivement à l'étape **E2** lorsque l'étape **E1** de surveillance est active.

Selon un mode de réalisation de l'invention, l'étape **E3** comprend une étape préliminaire **E30** de mesure au cours de laquelle une altitude **A** de l'aéronef est mesurée. Cette mesure d'une altitude peut être réalisée à l'aide d'un altimètre situé sur le fuselage de l'aéronef.

L'étape préliminaire **E30** compare, en chaque instant, l'altitude **A** de l'aéronef à un seuil prédéfini, dit troisième seuil **S3**. Si ladite altitude **A** de l'aéronef est supérieure audit troisième seuil **S3,** l'indicateur **iA** est activé. La valeur de l'indicateur **iA** est positionnée à 1 si une altitude **A** supérieure à **S3** est détectée, et à 0 sinon. Sinon, l'étape préliminaire **E30** continue de mesurer l'altitude **A** de l'aéronef en vue de détecter éventuellement une altitude supérieure à **S3.**

Successivement aux étapes **E1**, **E2** et **E3,** l'étape **E5** de détection examine l'activation simultanée des indicateurs **iA**, **iV** et **iN2.** Si les valeurs de ces indicateurs sont simultanément positionnées à 1, les conditions propices à l'apparition d'un pompage sont détectées et l'indicateur **iP** de risque de pompage est activé. En particulier, l'indicateur **iP** est positionné à 1. Sinon, le procédé reprend l'étape **E1** de surveillance, et continue d'examiner les variations de vitesse de l'aéronef, les variations de régime du compresseur haute pression et l'altitude de l'aéronef.

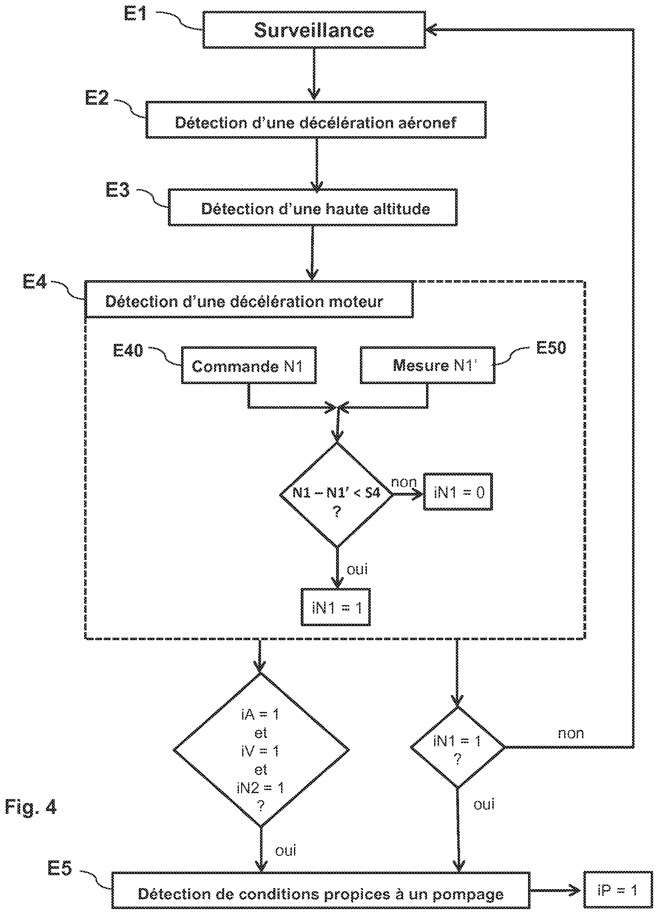

Selon un mode de réalisation de l'invention comme illustré sur la **figure 4****,** le procédé de détection peut également comprendre une étape **E4,** dite étape de détection d'une décélération moteur. Cette étape **E4** de détection d'une décélération moteur peut être mise en œuvre sensiblement simultanément ou successivement aux étapes **E2** et **E3** lorsque l'étape **E1** de surveillance est active.

L'étape **E4** de détection d'une décélération moteur comprend une étape de mesure **E40** d'un premier régime **N1,** dit régime commandé du compresseur basse pression **CBP.** En outre, l'étape **E4** comprend étape de mesure **E50** d'un deuxième régime **N1**', dit régime courant du compresseur basse pression **CBP.**

Pour un aéronef en phase de vol croisière, il est important de distinguer le régime commandé du régime courant d'une turbomachine **T.** Le régime commandé **N1** correspond au régime de fonctionnement du compresseur basse pression **CBP** requis par les pilotes de l'aéronef lorsqu'ils contrôlent la turbomachine **T** chacun à l'aide d'une manette des gaz. Le régime courant **N1**' correspond au régime réel de fonctionnement du compresseur basse pression **CBP.**

Parce qu'il existe toujours un temps de réponse entre le régime commandé par la manette des gaz et le régime courant du compresseur basse pression **CBP,** les régimes **N1** et **N1**' ne sont pas toujours égaux.

Sur base de la mesure du régime commandé **N1** et de la mesure du régime courant **N1**', l'étape **E4** mesure ensuite la différence entre ces deux valeurs en chaque instant. La différence entre **N1** et **N1**', égale à **N1** - **N1**' est ensuite comparée à un seuil prédéfini, dit quatrième seuil **S4.** Si la différence **N1** - **N1**' est inférieure audit quatrième seuil **S4,** l'indicateur **iN1** est activé. La valeur de l'indicateur **iN1** est positionnée à 1 si un écart de régime inférieur à **S4** est détectée, et à 0 sinon. Sinon, les étapes **E40** et **E50** continuent à surveiller le régime commandé **N1** et le régime courant **N1**' en vue de détecter éventuellement un écart de régime inférieur à **S4.**

En mode auto-manette, et comme la décélération commandée est lente à haute altitude en cas d'augmentation brutale du Mach, l'écart entre le régime courant **N1**' et le régime commandé **N1** peut être inférieur au seuil de détection S4 tout au long d'une décélération, ce qui conduit à ne pas la détecter, d'où la nécessité de mettre en place une seconde logique.

Successivement aux étapes **E1, E2, E3** et **E4,** l'étape **E5** de détection examine l'activation des indicateurs **iA**, **iV** et **iN2**. Si les valeurs de ces indicateurs sont simultanément positionnées à 1, les conditions propices à l'apparition d'un pompage sont détectées et l'indicateur **iP** de risque de pompage est activé. En particulier, l'indicateur **iP** est positionné à 1. Sinon, le procédé examine l'activation de l'indicateur **iN1**. Si l'indicateur **iN1** est positionné à 1, des conditions propices à l'apparition d'un pompage sont détectées. Sinon, le procédé reprend la mise en œuvre de l'étape **E1** de surveillance, et continue de surveiller les variations de vitesse de l'aéronef, les variations de régime du compresseur haute pression **CHP,** l'altitude de l'aéronef, et les variations de régime du compresseur basse pression **CBP.**

La valeur du quatrième seuil S4 est choisie de sorte à permettre une détection de conditions propices à l'apparition d'un pompage lorsque l'aéronef vole en mode auto-manette.

Le régime commandé **N1**' restant constant en mode-auto-manette, des conditions propices à l'apparition d'un pompage peuvent être détectées lorsque la différence entre **N1** et **N1**' devient inférieure à -1000 tours par minute sur un intervalle de temps de 10 secondes. La valeur du quatrième seuil **S4** est ainsi choisie de préférence égale à -100 tours par minute par seconde.

Selon ce mode de réalisation, il est possible de détecter un pompage à partir de la détection d'une diminution de vitesse **V** de l'aéronef, d'une variation **dN2** du régime de fonctionnement du compresseur haute pression **CHP,** d'une détection d'une haute altitude **A** de l'aéronef et d'une détection d'une différence entre régime commandé **N1** et régime courant **N1**' du compresseur basse pression **CBP.** Lorsque les étapes **E1**, **E2**, **E3,** et **E4** sont mises en œuvre, une détection fiable et précise de conditions propices à l'apparition d'un pompage pouvant affecter un turboréacteur **T** à double corps et à double flux est réalisable à haute altitude et à basse altitude.

Selon un autre mode de réalisation de l'invention non représenté sur les figures, ces étapes peuvent être mises en œuvre pour plusieurs turbomachines. En outre, ces étapes peuvent être mises en œuvre pour des turbomachines différentes.

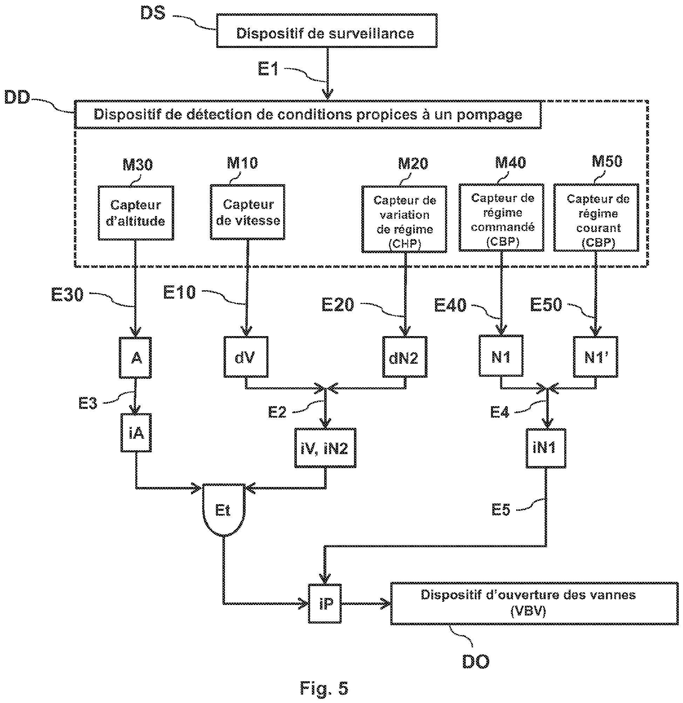

En référence à la **figure 5****,** l'invention vise également un dispositif **DD** de détection de conditions propices à l'apparition d'un pompage, ce pompage pouvant affecter un compresseur basse pression **CBP** d'une turbomachine, cette turbomachine comprenant en outre un compresseur haute pression **CHP.**

Le dispositif **DD** de détection de conditions propices à l'apparition d'un pompage est activé par l'étape **E1** de surveillance par un dispositif de surveillance **DS**. En outre, le dispositif **DD** de détection de conditions propices à l'apparition d'un pompage commande un dispositif **DO** d'ouverture des vannes de décharge **VBV.**

Selon un mode de réalisation de l'invention, le dispositif **DD** comprend :
- des premiers moyens de mesure **M10**, incluant par exemple un capteur de vitesse, configurés pour mesurer une vitesse **V** et pour calculer une variation de vitesse **dV** dudit aéronef au cours de l'étape **E10** ;
- des deuxièmes moyens de mesure **M20,** incluant par exemple un capteur de variation de régime, et configurés pour mesurer une variation de régime **dN2** du compresseur haute pression **CHP** au cours de l'étape **E20.**

Le dispositif **DD** comprend également des moyens pour mettre en œuvre l'étape **E2** et ainsi activer les indicateurs **iV** et **iN2** à partir de la comparaison de la variation de vitesse **dV** et de la variation de régime **dN2** du compresseur haute pression **CHP** au premier seuil **S1** et au deuxième seuil **S2,** respectivement.

Le dispositif **DD** comprend en outre :
- des troisièmes moyens de mesure **M30,** incluant par exemple un capteur d'altitude comme un altimètre, configurés pour mesurer une altitude **A** de l'aéronef au cours de l'étape préliminaire **E30** ;
- des quatrièmes moyens de mesure **M40,** incluant par exemple un système de contrôle de l'aéronef, configuré pour mesurer un régime commandé **N1** du compresseur basse pression **CBP** au cours de l'étape **E40** ;
- des cinquièmes moyens de mesure **M50**, incluant par exemple un capteur de vitesse apte à mesurer la vitesse de rotation de l'arbre **A1**, configuré pour mesurer un régime courant **N1**' du compresseur basse pression **CBP** au cours de l'étape **E50**.

Le dispositif **DD** comprend en outre des moyens pour mettre en œuvre l'étape **E3** et activer l'indicateur **iA** à partir de la comparaison de l'altitude **A** avec un troisième seuil **S3.**

Lorsque des conditions propices à l'apparition d'un pompage sont détectées, c'est-à-dire lorsque l'indicateur **iP** de risque de pompage est activé, le dispositif **DO** d'ouverture des vannes de décharge **VBV** est commandé pour ouvrir lesdites vannes de décharge. Un procédé et un dispositif de détection selon l'un ou l'autre mode de réalisation de l'invention permet de réaliser l'ouverture des vannes de décharge **VBV** lors de la détection de conditions propices à l'apparition d'un pompage.

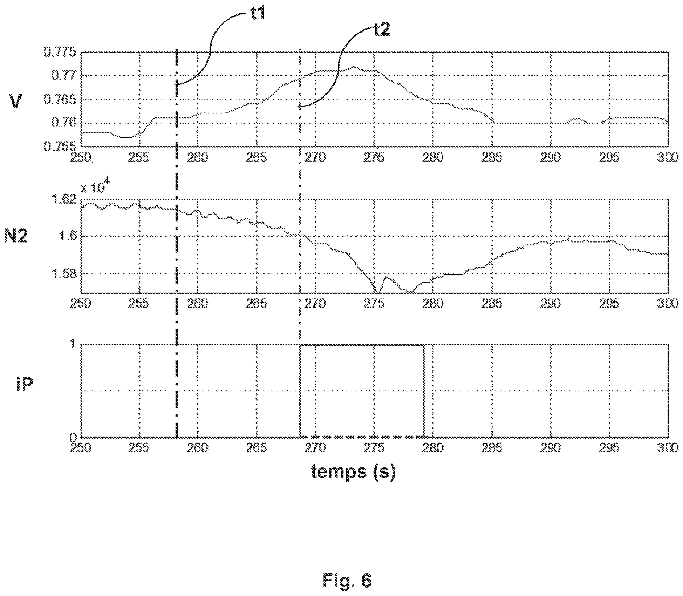

La **figure 6** représente un graphique illustrant un exemple de variation de plusieurs paramètres lorsqu'un pompage apparaît dans une turbomachine. Ces paramètres sont ici la vitesse **V** de l'aéronef, plus particulièrement son Mach, le régime de fonctionnement **N2** du compresseur haute pression **CHP**, et un indicateur **iP** représentatif de la détection de conditions propices à l'apparition d'un pompage lorsqu'un procédé selon un mode de réalisation de l'invention est mis en œuvre.

Les variations des trois paramètres **V, N2** et **iP** sont représentées sur un intervalle de temps compris entre 250 secondes et 300 secondes. La vitesse **V** de l'aéronef et le régime de fonctionnement **N2** du compresseur haute pression **CHP** sont mesurés ce même intervalle.

La vitesse **V** de l'aéronef augmente de 0,755 Mach à 0,77 Mach entre 250 secondes et 275 secondes, puis diminue de 0,77 Mach à 0,76 Mach de 275 secondes à 300 secondes. Le régime de fonctionnement **N2** diminue de 1620 tours par minute à 1580 tours par minute entre 250 secondes et 275 secondes, puis augmente de 1580 tours par minute à 1590 tours par minute entre 275 secondes et 300 secondes.

Comme illustré, l'invention permet de détecter des conditions propices à l'apparition d'un pompage entre l'instant **t1** de 258 secondes et l'instant **t2** de 268 secondes. En effet, une vitesse **V** égale à 0,76 Mach est mesurée en l'instant **t1**. En l'instant **t2,** une vitesse **V** égale à 0,77 Mach est mesurée. La différence de vitesse **dV** constatée dans l'intervalle de 10 secondes entre l'instant **t1** et l'instant **t2** est donc égale à 0,01 Mach. L'indicateur **iV** est activé dans ce cas, signalant une augmentation de vitesse **dV** supérieure au premier seuil **S1,** ce premier seuil étant fixé dans cet exemple à 0,009 Mach sur une durée de 10 secondes, soit un seuil d'accélération de 0,0009 Mach par seconde. En outre, un régime **N2** égal à 16150 tours par minute est mesuré en l'instant **t1,** et un régime **N2** égal à 16000 tours par minute est mesuré en l'instant **t2.** La différence de régime **dN2** dans l'intervalle de 10 secondes entre l'instant **t1** et l'instant **t2** est égale à -150 tours par minute, c'est-à-dire égale à -15 tours par minute par seconde, et est donc inférieure à -8 tours par minute par seconde. L'indicateur **iN2** est activé dans ce cas, signalant une diminution du régime de fonctionnement du compresseur haute pression **CHP** inférieure au seuil **S2.**

L'indicateur **iV** et l'indicateur **iN2** étant positionnés à 1 entre l'instant **t1** et l'instant **t2,** l'indicateur **iP** représentatif de la détection de conditions propices à l'apparition d'un pompage est également activé sur cet intervalle.

On comprendra qu'un procédé de détection de conditions propices à l'apparition d'un pompage selon l'un des modes de réalisation de l'invention ici décrits, ainsi qu'un dispositif de détection de pompage selon ce mode de réalisation, est mis en œuvre dans une turbomachine. En particulier, la turbomachine peut être un turboréacteur **T** à double corps et à double flux, comprenant le dispositif **DD** de détection de conditions propices à l'apparition d'un pompage.

Selon un mode de réalisation de l'invention, le dispositif **DD** de détection de conditions propices à l'apparition d'un pompage est mis en œuvre à l'aide d'un logiciel implémenté dans une unité électronique de contrôle de la turbomachine, embarquée sur la turbomachine, appelée ECU (Engine Control Unit) ou aussi FADEC (Full Authority Digital Engine Control). En particulier, ce logiciel comprend des instructions adaptées à la mise en œuvre de toute étape du procédé décrit précédemment.

## Revendications

1. Un procédé de détection de conditions propices à l'apparition d'un pompage pouvant affecter un compresseur basse pression (CBP) d'une turbomachine d'aéronef, ladite turbomachine comprenant en outre un compresseur haute pression (CHP), ledit procédé étant **caractérisé en ce qu'**il comprend:
- une première étape de mesure (E10) d'une variation de vitesse (dV) dudit aéronef ;
- une deuxième étape de mesure (E20) d'une variation de régime (dN2) dudit compresseur haute pression (CHP) ;
- une étape préliminaire de mesure (E30) d'une altitude (A) de l'aéronef ;
les conditions propices à l'apparition d'un pompage étant détectées lorsque les conditions a), b) et c) suivantes sont réalisées conjointement:
a) ladite variation de vitesse (dV) mesurée sur un intervalle de temps prédéterminé correspond à une accélération supérieure à un premier seuil (S1) positif, et
b) ladite variation de régime (dN2) mesurée correspond à une décélération inférieure à un deuxième seuil (S2) négatif;
c) ladite altitude mesurée est supérieure à un troisième seuil (S3) prédéterminé.

2. Le procédé de détection selon la revendication 1, **caractérisé en ce que** ledit premier seuil (S1) est compris entre 10⁻⁴ Mach par seconde et 10⁻² Mach par seconde, le premier seuil étant par exemple égal à 0.001 Mach par seconde.

3. Le procédé de détection selon l'une quelconque des revendications 1 ou 2, **caractérisé en ce que** ledit intervalle de temps est compris entre 3 secondes et 20 secondes, l'intervalle de temps étant par exemple égal à 10 secondes.

4. Le procédé de détection selon l'une quelconque des revendications précédentes, **caractérisé en ce que** ledit deuxième seuil (S2) est compris entre -2 tours par minute par seconde et -20 tours par minute par seconde, le deuxième seuil étant par exemple égal à -8 tours par minute par seconde.

5. Le procédé de détection selon l'une quelconque des revendications précédentes, **caractérisé en ce que** ledit troisième seuil (S3) est compris entre 20000 pieds (6096 mètres) et 30000 pieds (9144 mètres), le troisième seuil étant par exemple égal à 25000 pieds (7620 mètres).

6. Le procédé de détection selon l'une quelconque des revendications précédentes, **caractérisé en ce que** ledit procédé comprend en outre :
- une quatrième étape de mesure (E40) d'un premier régime commandé (N1) du compresseur basse pression (CBP) ;
- une cinquième étape de mesure (E50) d'un deuxième régime courant (N1') du compresseur basse pression (CBP) ;
les conditions propices à l'apparition d'un pompage étant détectées, indépendamment de la réalisation des conditions a), b) et c), lorsque la condition d) suivante est réalisée:
d) la différence entre ledit premier régime commandé (N1) mesuré et ledit deuxième régime courant (N1') mesuré est inférieure à un quatrième seuil (S4), ledit quatrième seuil étant par exemple égal à -100 tours par minute.

7. Le procédé de détection selon la revendication 6, **caractérisé en ce que** si l'altitude mesurée est inférieure au troisième seuil (S3), les première et deuxième étapes de mesure (E10, E20) sont ignorées et les conditions propices à l'apparition d'un pompage sont détectées lorsque la condition d) est réalisée.

8. Le procédé de détection selon l'une quelconque des revendications précédentes, **caractérisé en ce que** la détection de conditions propices à l'apparition d'un pompage déclenche une commande d'ouverture de vannes de décharge (VBV) situées entre le compresseur basse pression (CBP) et le compresseur haute pression (CHP).

9. Le procédé de détection selon l'une quelconque des revendications précédentes, caractérisé en ce ladite variation de régime (dN2) est mesurée en calculant la dérivée (dN2/dt) du régime puis en la filtrant avec une constante de temps adaptée pour moyenner la mesure sur un intervalle de temps compris entre 1 seconde et 3 secondes.

10. Un dispositif de détection de conditions propices à l'apparition d'un pompage pouvant affecter un compresseur basse pression (CBP) d'une turbomachine d'aéronef, ladite turbomachine comprenant en outre un compresseur haute pression (CHP), ledit dispositif étant **caractérisé en ce qu'**il comprend:
- des premiers moyens de mesure (M10) d'une variation de vitesse (dV) dudit aéronef ;
- des deuxièmes moyens de mesure (M20) d'une variation de régime (dN2) dudit compresseur haute pression (CHP) ;
- des troisièmes moyens de mesure (M30) d'une altitude (A) de l'aéronef ;
le dispositif comprenant en outre des moyens de détection d'une accélération de l'aéronef, lesdits moyens de détection comprenant:
- des moyens d'activation d'un premier indicateur (iV) représentatif d'une variation de vitesse ;
- des moyens d'activation d'un deuxième indicateur (iN2) représentatif d'une variation de régime du compresseur haute pression (CHP) ;
- des moyens d'activation d'un troisième indicateur (iA) ;
- des moyens d'activation d'un indicateur de risque de pompage (iP) représentatif de la détection de conditions propices à l'apparition d'un pompage ;
ledit indicateur de risque de pompage (iP) étant activé lorsque le premier indicateur (iV), le deuxième indicateur (iN2) et le troisième indicateur (iA) sont activés simultanément ;
∘ le premier indicateur (iV) étant activé lorsque la variation de vitesse (dV) mesurée sur un intervalle de temps prédéterminé correspond à une accélération supérieure à un premier seuil (S1) ;
∘ le deuxième indicateur (iN2) étant activé lorsque la variation de régime (dN2) mesurée correspond à une décélération inférieure à un deuxième seuil (S2) ; et
∘ le troisième indicateur (iA) étant activé lorsque l'altitude mesurée est supérieure à un troisième seuil (S3) prédéterminé.

11. Le dispositif de détection selon la revendication 10, **caractérisé en ce que** ledit premier seuil (S1) est compris entre 10⁻⁴ Mach par seconde et 10⁻² Mach par seconde, le premier seuil étant par exemple égal à 0.001 Mach par seconde, et **en ce que** ledit intervalle de temps est compris entre 3 secondes et 20 secondes, l'intervalle de temps étant par exemple égal à 10 secondes.

12. Le dispositif de détection selon l'une quelconque des revendications 10 à 11, **caractérisé en ce que** ledit deuxième seuil (S2) est compris entre -2 tours par minute par seconde et -20 tours par minute par seconde, le deuxième seuil étant par exemple égal à -8 tours par minute par seconde.

13. Le dispositif de détection selon l'une quelconque des revendications 10 à 12, **caractérisé en ce que** ledit troisième seuil (S3) est compris entre 20000 pieds (6096 mètres) et 30000 pieds (9144 mètres), le troisième seuil étant par exemple égal à 25000 pieds (7620 mètres).

14. Le dispositif de détection selon l'une quelconque des revendications 10 à 13, **caractérisé en ce que** ledit dispositif comprend en outre :
- des quatrièmes moyens de mesure (M40) d'un premier régime commandé (N1) du compresseur basse pression (CBP) ;
- des cinquièmes moyens de mesure (M50) d'un deuxième régime courant (N1') du compresseur basse pression (CBP) ;
les moyens de détection d'une accélération de l'aéronef comprenant en outre des moyens d'activation d'un quatrième indicateur (iN1), l'indicateur de risque de pompage (iP) étant activé lorsque le premier indicateur (iV), le deuxième indicateur (iN2) et le troisième indicateur (iA) ne sont pas activés simultanément et lorsque ledit quatrième indicateur (iN1) est activé, ledit quatrième indicateur (iN1) étant activé lorsque la différence entre ledit premier régime commandé (N1) mesuré et ledit deuxième régime courant (N1') mesuré est inférieure à un quatrième seuil (S4), ledit quatrième seuil étant par exemple égal à -100 tours par minute.

15. Turbomachine d'aéronef comprenant le dispositif de détection selon l'une quelconque des revendications 10 à 14.

## Patentansprüche

1. Verfahren zum Erfassen von für den Pumpbeginn günstigen Bedingungen, die einen Niederdruckverdichter (CBP) eine Flugzeugturbomaschine betreffen können, wobei der Turbinenmotor weiter einen Hochdruckverdichter (CHP) umfasst, wobei das Verfahren **dadurch gekennzeichnet ist, dass** es umfasst:
- einen ersten Messschritt (E10) einer Geschwindigkeitsveränderung (dV) des Flugzeugs;
- einen zweiten Messschritt (E20) eines Regimeveränderung (dN2) des Hochdruckverdichters (CHP);
- einen vorbereitenden Messschritt (E30) einer Flughöhe (A) des Flugzeugs;
wobei die für den Pumpbeginn günstigen Bedingungen erfasst werden, wenn die folgenden Bedingungen a), b) und c) gemeinsam umgesetzt werden:
a) die über einem vorbestimmten Zeitintervall gemessene Geschwindigkeitsveränderung (dV) entspricht einer Beschleunigung, die größer als ein erster positiver Schwellenwert (S1) ist, und
b) das gemessene Regimeveränderung (dN2) entspricht einer Verzögerung, die kleiner als ein zweiter negativer Schwellenwert (S2) ist;
c) die gemessene Flughöhe ist größer als ein dritter vorbestimmter Schwellenwert (S3).

2. Verfahren zum Erfassen nach Anspruch 1, **dadurch gekennzeichnet, dass** der erste Schwellenwert (S1) zwischen 10⁻⁴ Mach pro Sekunde und 10⁻² Mach pro Sekunde umfasst ist, wobei der erste Schwellenwert beispielsweise gleich 0,001 Mach pro Sekunde ist.

3. Verfahren zum Erfassen nach einem der Ansprüche 1 oder 2, **dadurch gekennzeichnet, dass** das Zeitintervall zwischen 3 Sekunden und 20 Sekunden umfasst ist, wobei das Zeitintervall beispielsweise gleich 10 Sekunden ist.

4. Verfahren zum Erfassen nach einem der vorstehenden Ansprüche, **dadurch gekennzeichnet, dass** der zweite Schwellenwert (S2) zwischen -2 Umdrehungen pro Minute pro Sekunde und -20 Umdrehungen pro Minute pro Sekunde umfasst ist, wobei der zweite Schwellenwert beispielsweise gleich -8 Umdrehungen pro Minute pro Sekunde ist.

5. Verfahren zum Erfassen nach einem der vorstehenden Ansprüche, **dadurch gekennzeichnet, dass** der dritte Schwellenwert (S3) zwischen 20000 Fuß (6096 Meter) und 30000 Fuß (9144 Meter) umfasst ist, wobei der dritte Schwellenwert beispielsweise gleich 25000 Fuß (7620 Meter) ist.

6. Verfahren zum Erfassen nach einem der vorstehenden Ansprüche, **dadurch gekennzeichnet, dass** das Verfahren weiter umfasst:
- einen vierten Messschritt (E40) eine ersten gesteuerten Regime (N1) des Niederdruckverdichters (CBP);
- einen fünften Messschritt (E50) eine zweiten laufenden Regime (N1') des Niederdruckverdichters (CBP);
wobei die für den Pumpbeginn günstigen Bedingungen unabhängig von der Umsetzung der Bedingungen a), b) und c) erfasst werden, wenn die folgende Bedingung d) umgesetzt wird:
d) die Differenz zwischen der gemessenen ersten gesteuerten Regime(N1) und der gemessenen zweiten laufenden Regime (N1') ist kleiner als ein vierter Schwellenwert (S4), wobei der vierte Schwellenwert beispielsweise gleich -100 Umdrehungen pro Minute ist.

7. Verfahren zum Erfassen nach Anspruch 6, **dadurch gekennzeichnet, dass**, falls die gemessene Flughöhe kleiner als der dritte Schwellenwert (S3) ist, der erste und zweite Messschritt (E10, E20) ignoriert werden, und die für den Pumpbeginn günstigen Bedingungen erfasst werden, wenn die Bedingung d) umgesetzt wird.

8. Verfahren zum Erfassen nach einem der vorstehenden Ansprüche, **dadurch gekennzeichnet, dass** die Erfassung von für den Pumpbeginn günstigen Bedingungen eine Öffnungsansteuerung von Ablassventilen (VBV) auslöst, die sich zwischen dem Niederdruckverdichter (CBP) und dem Hochdruckverdichter (CHP) befinden.

9. Verfahren zum Erfassen nach einem der vorstehenden Ansprüche, **dadurch gekennzeichnet, dass** die Regimeveränderung (dN2) gemessen wird, indem die Ableitung (dN2/dt) die Regime berechnet wird, diese danach mit einer Zeitkonstanten gefiltert wird, die angepasst ist, um den Messwert über ein Zeitintervall hinweg zu mitteln, das zwischen 1 Sekunde und 3 Sekunden umfasst ist.

10. Vorrichtung zum Erfassen von für den Pumpbeginn günstigen Bedingungen, die einen Niederdruckverdichter (CBP) eine Flugzeugturbomaschine betreffen können, wobei der Turbinenmotor weiter einen Hochdruckverdichter (CHP) umfasst, wobei die Vorrichtung **dadurch gekennzeichnet ist, dass** sie umfasst:
- erste Messmittel (M10) einer Geschwindigkeitsveränderung (dV) des Flugzeugs;
- zweite Messmittel (M20) eine Regimeveränderung (dN2) des Hochdruckverdichters (CHP);
- dritte Messmittel (M30) einer Flughöhe (A) des Flugzeugs;
wobei die Vorrichtung weiter Mittel zum Erfassen einer Beschleunigung des Flugzeugs umfasst, wobei die Mittel zum Erfassen umfassen:
- Mittel zum Aktivieren eines ersten Indikators (iV), der repräsentativ für eine Geschwindigkeitsveränderung ist;
- Mittel zum Aktivieren eines zweiten Indikators (iN2), der repräsentativ für eine Regimeveränderung des Hochdruckverdichters (CHP);
- Mittel zum Aktivieren eines dritten Indikators (iA);
- Mittel zum Aktivieren eines Indikators für ein Pumprisiko (iP), der repräsentativ für die Erfassung von für den Pumpbeginn günstigen Bedingungen ist;
wobei der Indikator für ein Pumprisiko (iP) aktiviert wird, wenn der erste Indikator (iV), der zweite Indikator (iN2) und der dritte Indikator (iA) gleichzeitig aktiviert werden;
∘ wobei der erste Indikator (iV) aktiviert wird, wenn die über einem vorbestimmten Zeitintervall gemessene Geschwindigkeitsveränderung (dV) einer Beschleunigung entspricht, die größer als ein erster Schwellenwert (S1) ist;
∘ der zweite Indikator (iN2) aktiviert wird, wenn die gemessene Regimeveränderung (dN2) einer Verzögerung entspricht, die kleiner als ein zweiter Schwellenwert (S2) ist; und
∘ der dritte Indikator (iA) aktiviert wird, wenn die gemessene Flughöhe größer als ein dritter vorbestimmter Schwellenwert (S3) ist.

11. Vorrichtung zum Erfassen nach Anspruch 10, **dadurch gekennzeichnet, dass** der erste Schwellenwert (S1) zwischen 10⁻⁴ Mach pro Sekunde und 10⁻² Mach pro Sekunde umfasst ist, wobei der erste Schwellenwert beispielsweise gleich 0,001 Mach pro Sekunde ist, und dadurch, dass das Zeitintervall zwischen 3 Sekunden und 20 Sekunden umfasst ist, wobei das Zeitintervall beispielsweise gleich 10 Sekunden ist.

12. Vorrichtung zum Erfassen nach einem der Ansprüche 10 bis 11, **dadurch gekennzeichnet, dass** der zweite Schwellenwert (S2) zwischen -2 Umdrehungen pro Minute pro Sekunde und -20 Umdrehungen pro Minute pro Sekunde umfasst ist, wobei der zweite Schwellenwert beispielsweise gleich -8 Umdrehungen pro Minute pro Sekunde ist.

13. Vorrichtung zum Erfassen nach einem der Ansprüche 10 bis 12, **dadurch gekennzeichnet, dass** der dritte Schwellenwert (S3) zwischen 20000 Fuß (6096 Meter) und 30000 Fuß (9144 Meter) umfasst ist, wobei der dritte Schwellenwert beispielsweise gleich 25000 Fuß (7620 Meter) ist.

14. Vorrichtung zum Erfassen nach einem der Ansprüche 10 bis 13, **dadurch gekennzeichnet, dass** die Vorrichtung weiter umfasst:
- vierte Messmittel (M40) eine ersten gesteuerten Regime (N1) des Niederdruckverdichters (CBP);
- fünfte Messmittel (M50) eine zweiten laufenden Regime (N1') des Niederdruckverdichters (CBP);
wobei die Mittel zum Erfassen einer Beschleunigung des Flugzeugs weiter Mittel zum Aktivieren eines vierten Indikators (iN1) umfassen, wobei der Indikator für ein Pumprisiko (iP) aktiviert wird, wenn der erste Indikator (iV), der zweite Indikator (iN2) und der dritte Indikator (iA) nicht gleichzeitig aktiviert werden, und wenn der vierte Indikator (iN1) aktiviert wird, wobei der vierte Indikator (iN1) aktiviert wird, wenn die Differenz zwischen die gemessenen ersten gesteuerten Regime (N1) und die zweiten gemessenen laufenden Regime (N1') ist kleiner als ein vierter Schwellenwert (S4) ist, wobei der vierte Schwellenwert beispielsweise gleich -100 Umdrehungen pro Minute ist.

15. Flugzeugturbomaschine, die Vorrichtung zum Erfassen nach einem der Ansprüche 10 bis 14 umfassend.

## Claims

1. Method for detecting conditions conducive to the onset of a pumping that can affect a low-pressure compressor (CBP) of an aircraft turbine engine, said turbine engine further comprising a high-pressure compressor (CHP), said method being **characterised in that** it comprises:
- a first step (E10) of measuring a speed variation (dV) of said aircraft;
- a second step (E20) of measuring a speed variation (dN2) of said high-pressure compressor (CHP);
- a preliminary step (E30) of measuring an altitude (A) of the aircraft;
the conditions conducive to the onset of a pumping being detected when the following conditions a), b) and c) are jointly obtained:
a) said speed variation (dV) measured over a predetermined time interval corresponds to an acceleration greater than a first positive threshold (S1), and
b) said measured speed variation (dN2) corresponds to a deceleration less than a second negative threshold (S2);
c) said measured altitude is higher than a predetermined third threshold (S3).

2. Detection method according to claim 1, **characterised in that** said first threshold (S1) is of between 10⁻⁴ Mach per second and 10⁻² Mach per second, with the first threshold being for example equal to 0.001 Mach per second.

3. Detection method according to any one of claims 1 or 2, **characterised in that** said time interval is of between 3 seconds and 20 seconds, the time interval being for example equal to 10 seconds.

4. Detection method according to any one of the preceding claims, **characterised in that** said second threshold (S2) is of between -2 revolutions per minute per second and -20 revolutions per minute per second, the second threshold being for example equal to -8 revolutions per minute per second.

5. Detection method according to any one of the preceding claims, **characterised in that** said third threshold (S3) is of between 20,000 feet (6096 metres) and 30,000 feet (9,144 metres), with the third threshold being for example equal to 25,000 feet (7,620 metres).

6. Detection method according to any one of the preceding claims, **characterised in that** said method further comprises:
- a fourth step (E40) of measuring a first controlled speed (N1) of the low-pressure compressor (CBP);
- a fifth step (E50) of measuring a second current speed (N1') of the low-pressure compressor (CBP);
with the conditions conducive to the onset of a pumping being detected, independently of the fulfilling of the conditions a), b) and c), when the following condition d) is fulfilled:
d) the difference between said first measured controlled speed (N1) and said second measured current speed (N1') is less than fourth threshold (S4), with said fourth threshold being for example equal to -100 revolutions per minute.

7. Detection method according to claim 6, **characterised in that** if the measured altitude is less than the third threshold (S3), the first and second measuring steps (E10, E20) are ignored and the conditions conducive to the onset of a pumping are detected when the condition d) is fulfilled.

8. Detection method according to any one of the preceding claims, **characterised in that** the detection of conditions conducive to the onset of a pumping triggers a command to open bleed valves (VBV) located between the low-pressure compressor (CBP) and the high-pressure compressor (CHP).

9. Detection method according to any one of the preceding claims, **characterised in that** said speed variation (dN2) is measured by calculating the derivative (dN2/dt) of the speed then by filtering it with a time constant adapted to average the measurement over a time interval between 1 second and 3 seconds.

10. Device for detecting conditions conducive to the onset of a pumping that can affect a low-pressure compressor (CBP) of an aircraft turbine engine, said turbine engine further comprising a high-pressure compressor (CHP), said device being **characterised in that** it comprises:
- first means for measuring (M10) a speed variation (dV) of said aircraft;
- second means for measuring (M20) a speed variation (dN2) of said high-pressure compressor (CHP);
- third means for measuring (M30) an altitude (A) of the aircraft;
with the device further comprising means for detecting an acceleration of the aircraft, said detection means comprising:
- means for activating a first indicator (iV) that represents a speed variation;
- means for activating a second indicator (iN2) that represents a speed variation of the high-pressure compressor (CHP);
- means for activating a third indicator (iA);
- means for activating an indicator of the risk of pumping (iP) representing the detection of conditions conducive to the onset of a pumping;
said indicator of the risk of pumping (iP) being activated when the first indicator (iV), the second indicator (iN2) and the third indicator (iA) are activated simultaneously;
o with the first indicator (iV) being activated when the speed variation (dV) measured over a predetermined time interval corresponds to an acceleration greater than a first threshold (S1);
o with the second indicator (iN2) being activated when the measured speed variation (dN2) corresponds to a deceleration less than a second threshold (S2); and
o with the third indicator (iA) being activated when the measured altitude is higher than a predetermined third threshold (S3).

11. Detection device according to claim 10, **characterised in that** said first threshold (S1) is of between 10⁻⁴ Mach per second and 10⁻² Mach per second, with the first threshold being for example equal to 0.001 Mach per second and **in that** said time interval is comprised between 3 seconds and 20 seconds, the time interval being for example equal to 10 seconds.

12. Detection device according to any one of claims 10 to 11, **characterised in that** said second threshold (S2) is of between -2 revolutions per minute per second and -20 revolutions per minute per second, the second threshold being for example equal to -8 revolutions per minute per second.

13. Detection device according to any one of claims 10 to 12, **characterised in that** said third threshold (S3) is of between 20,000 feet (6,096 metres) and 30,000 feet (9,144 metres), with the third threshold being for example equal to 25,000 feet (7,620 metres).

14. Detection device according to any one of claims 10 to 13, **characterised in that** said device further comprises:
- fourth means for measuring (M40) a first controlled speed (N1) of the low-pressure compressor (CBP);
- fifth means for measuring (M50) a second current speed (N1') of the low-pressure compressor (CBP);
with the means for detecting an acceleration of the aircraft further comprising means for activating a fourth indicator (iN1), with the indicator of the risk of pumping (iP) being activated when the first indicator (iV), the second indicator (iN2) and the third indicator (iA) are not activated simultaneously and when said fourth indicator (iN1) is activated, with said fourth indicator (iN1) being activated when the difference between said first measured controlled speed (N1) and said second measured current speed (N1') is less than a fourth threshold (S4), with said fourth threshold being for example equal to -100 revolutions per minute.

15. Aircraft turbine engine comprising the detection device according to any one of claims 10 to 14.
